Europäisches Patentamt

European Patent Office

Office européen des brevets

(19)

(11) Veröffentlichungsnummer: **0 170 903**
**A1**

(12) **EUROPÄISCHE PATENTANMELDUNG**

(21) Anmeldenummer: 85108463.2

(22) Anmeldetag: 09.07.85

(51) Int. Cl.⁴: **F 16 B 45/04**

(30) Priorität: 07.08.84 DE 8423391 U

(43) Veröffentlichungstag der Anmeldung: 12.02.86
Patentblatt 86/7

(84) Benannte Vertragsstaaten: AT CH DE FR GB LI NL

(71) Anmelder: Henssgen Karabinerhaken GmbH,
Postfach 1140, D-5603 Wülfrath/Rhld. (DE)

(72) Erfinder: Kutschera, Wolfgang, Am Wasserturm 50,
D-5603 Wülfrath (DE)

(74) Vertreter: Sturies, Herbert et al, Patentanwälte Dr. Ing.
Dipl. Phys. Herbert Sturies Dipl. Ing. Peter Eichler
Postfach 20 12 42, D-5600 Wuppertal 2 (DE)

(54) **Karabinerhaken.**

(57) Der Karabinerhaken (10) ist insbesondere für die Hochbausicherung bestimmt. Sein Hakenmaul (14) ist mit einem in einer Längsausnehmung (22) des Hakenschaftes (12) verschieblichen, federbelasteten Schnäpper (23) verschlossen, an dem ein seitlich nach außen vorspringender, in einen Führungsschlitz (27) des Hakenschaftes (12) eingreifender Betätigungsbart (26) befestigt und an dem ein federbelastetes Sperrteil vorhanden ist. Das Sperrteil ist vor dem Öffnen des Schnäppers (23) von Hand und entgegen der Federkraft in eine Öffnungsbereitschaftslage verstellbar.

Um den Karabinerhaken (10) mit einer verbesserten Sicherungseinrichtung zu versehen, ist der Betätigungsbart (26) das Sperrteil und ist bei Schließstellung des Schnäppers (23) von der Schnäpperfeder (24) aus dem Führungsschlitz (27) herausgedrückt und zu letzterem verdreht gehalten.

**PATENTANWÄLTE**

DR.-ING. DIPL.-PHYS. **H. STURIES**
DIPL.-ING. **P. EICHLER**

BRAHMSSTRASSE 29, 5600 WUPPERTAL 2

0170903

Henssgen Karabinerhaken GmbH, Schillerstr. 50
5603 Wülfrath

===================================================

Karabinerhaken

Die Erfindung bezieht sich auf einen Karabinerhaken, insbesondere für Hochbausicherungen, dessen
Hakenmaul mit einem in einer Längsausnehmung des
Hakenschaftes verschieblichen, federbelasteten Schnäpper verschlossen ist, an dem ein seitlich nach außen
vorspringender, in einen Führungsschlitz des Hakenschaftes eingreifender Betätigungsbart befestigt und
an dem ein federbelastetes Sperrteil vorhanden ist,
das vor dem Öffnen des Schnäppers von Hand und entgegen der Federkraft in eine Öffnungsbereitschaftslage verstellbar ist.

Karabinerhaken der obigen Art werden für die
verschiedenartigsten Seilhaltezwecke eingesetzt,
insbesondere auch für den Hochbau, wo sie an Halteseile od. dgl. angelegt werden. Ihr Schnäpper ermöglicht über den Betätigungsbart eine einfache Einhand-Bedienung insofern, als der Hakenschaft von der Bedienungshand umgriffen und der Betätigungsbart mit dem Daumen zum Öffnen des Hakenmauls zurückgezogen werden kann. Der Betätigungsbart birgt jedoch die Gefahr, daß er bei einem entsprechenden Umschlingen mit einem Seil oder bei einem unbeabsichtigten Auftreffen des Betätigungsbartes auf Gegenstände ungewollt zurückgeschoben und damit die Möglichkeit des Aushakens gegeben ist, was bei Sicherungen nicht zugelassen werden darf. Es ist daher bereits ein federbelastetes Sperrteil vorgeschlagen worden, das entgegen einer Federkraft in eine Öffnungsbereitschaftslage verstellt werden muß, bevor der Schnäpper in seine Öffnungslage verschoben werden kann. Dieses Sperrteil ist eine beweglich am Karabinerhaken gelagerte Klinke, die in den Schnäpper eingreift und dessen Verschieben verhindert, sofern sie nicht zuvor betätigt wurde. Zur Rückstellung der Klinke ist eine besondere Feder erforderlich, so daß die zusätzliche Sicherungseinrichtung eine baulich aufwendige und daher auch störungsanfällige Konstruktion ist, die darüber hinaus auch zufällig auslösbar ist, nämlich durch ein umschlingendes Seil bzw. ein Auftreffen der Klinke auf einen Gegenstand.

Der Erfindung liegt daher die Aufgabe zugrunde, einen Karabinerhaken der eingangs genannten Art mit einer verbesserten Sicherungseinrichtung zu versehen.

Diese Aufgabe wird dadurch gelöst, daß der Betätigungsbart das Sperrteil ist und bei Schließstellung des Schnäppers von der Schnäpperfeder aus dem Führungsschlitz herausgedrückt und zu letzterem verdreht gehalten ist.

Für die Erfindung ist von Bedeutung, daß der Schnäpper bzw. sein Betätigungsbart sowohl das Verschließen des Hakenmauls, als auch die Sicherung gegen unbeabsichtigtes Verstellen selbst übernimmt. Die zusätzliche Sicherungsfunktion wird dadurch erreicht, daß er nicht nur längsverschieblich ist, sondern in seine Schließstellung auch verdreht werden kann. Der Schnäpper führt also von seinem Weg aus seiner Verschlußstellung zur Öffnungsstellung nacheinander erst eine Verdrehung und dann eine Verschiebung aus. Es ist äußerst unwahrscheinlich, daß ein Umschlingen des Karabinerhakens mit einem Seil od. dgl. bzw. ein Auftreffen des Karabinerhakens auf einen Gegenstand od. dgl. eine derartige kombinierte Verdreh/Verschiebebewegung erzeugt und damit zum Öffnen des Hakenmauls führt. Der erforderliche Sicherungszweck wird also erreicht. Darüber hinaus bleibt die gewünschte Einhandbedienung weiterhin möglich, da der Daumen die kombinierte Verdreh/Verschiebebewegung ohne weiteres ausführen kann, während die Finger der Bedienungshand den Karabinerhaken bzw. dessen Hakenschaft fest umschließen. Von besonderer Bedeutung ist jedoch, daß der konstruktive Aufwand gegenüber einem herkömmlichen Karabinerhaken mit zusätzlicher Öffnungssicherung erheblich reduziert wird bzw. zusätzlicher bauteilmäßiger Aufwand zur Erreichung einer Öffnungssicherung im Vergleich zu einem Karabinerhaken ohne Sicherungseinrichtung vermieden werden kann.

In Ausgestaltung der Erfindung ist der Betätigungsbart von einem Drehbegrenzungsanschlag aus der Hakenöffnung herausgehalten, womit dazu beigetragen wird, daß der Karabinerhaken bzw. dessen Betätigungsbart nicht ungewollt beaufschlagt wird.

Die Verdrehstellung des Betätigungsbartes ist durch dessen verschiebungsfreies Verdrehen aus der am hakenspitzenseitigen Ende des Führungsschlitzes gelegenen Öffnungsbereitschaftslage erreichbar. Dabei befindet sich der Betätigungsbart nahe der Hakenspitze, was für die kombinierte Verdreh/Verschiebebewegung des Schnäppers bei Einhandbedienung am vorteilhaftesten ist. Darüber hinaus ist der bauliche Aufwand für diese Ausbildung des Karabinerhakens sehr gering. Es ist jedoch auch möglich, die Verdrehstellung an anderer Stelle der Schnäpperführung anzuordnen, beispielsweise ausgehend von der Mitte des Führungsschlitzes.

Bei einem Karabinerhaken, bei dem die Schnäpperfeder eine Schraubenfeder ist, die mit einem Ende am Schnäpper und mit dem anderen Ende am Hakenschaft angreift, sind die Enden jeweils verdrehfest angebracht und die Schnäpperfeder ist drehvorgespannt. Statt der üblichen Schraubendruckfeder braucht also lediglich eine drehvorspannbare ähnliche Feder mit beispielsweise axial vorstehenden Eingriffsenden verwendet zu werden, um den Schnäpper in der gewünschten Weise zu beaufschlagen.

Der Hakenschaft weist eine Eingriffsausnehmung auf, in die der in Verdrehstellung befindliche Betätigungsbart bei das Hakenmaul öffnender Verschiebebewegung verdrehungsgesichert eingreift. Diese Ausgestaltung des Karabinerhakens bedeutet eine zusätzliche Sicherung gegen ungewolltes Öffnen des Hakenmauls, da die Eingriffsausnehmung eine Verdrehung des Schnäppers über den in sie eingreifenden Betätigungsbart verhindert, wenn dieser unvorhergesehenermaßen in seiner Längsrichtung verschoben wird. Diese zusätzliche Verdrehungssicherung hat darüber hinaus den Vorteil, daß sie bei normaler Betätigung des Schnäppers mit der Bedienungshand überhaupt nicht auffällt, weil der Schnäpper durch seine Schnäpperfeder nach oben gedrückt ist und der Daumen beim Verdrehen des Betätigungsbartes zunächst keine Verschiebebewegung ausführt.

Eine zusätzliche Sicherung gegen ungewolltes Verdrehen des Schnäppers kann aber auch dadurch erreicht werden, daß die Hakenspitze eine Rastausnehmung aufweist, in der der in Verdrehstellung befindliche Betätigungsbart von der Schnäpperfeder gegen Verdrehen gesichert gehalten ist. Es ist dann erforderlich, der Verdrehung des Betätigungsbartes eine kurze Verschiebebewegung vorzuschalten, um den Betätigungsbart aus der Rastausnehmung zu entfernen, was aber eine problemlose Einhandbedienung des Karabinerhakens praktisch nicht beeinflußt.

Der Betätigungsbart übernimmt bei seinem Eingriff in die Hakenspitze zugleich die hakenspitzseitige Halterung des Schnäppers, der infolge einer Beaufschlagung des Schnäppers im Sicherungsfall nicht überlastet werden kann.

Die hakenöffnungsseitigen Kanten der Eingriffsausnehmung und/oder der Rastausnehmung bilden den Drehbegrenzungsanschlag. Das vereinfacht die konstruktive Ausbildung des Karabinerhakens.

Die der Verdrehstellung gegenüberliegende Kante des Führungsschlitzes weist einen die Öffnungsbereitschaftslage des Betätigungsbartes bestimmenden Stellanschlag auf, der bei einer Verdrehung des Schnäppers aus seiner Verdrehstellung heraus dafür sorgt, daß der Betätigungsbart genau in diejenige Lage gelangt, nämlich die Öffnungsbereitschaftslage, aus der heraus er im Führungsschlitz verschoben und damit das Hakenmaul geöffnet werden kann.

An dem Schnäpper ist ein in die Hakenspitze eingreifender Vorsprung vorhanden, der erst bei in den Führungsschlitz eingreifenden Betätigungsbart mit der Hakenspitze außer Eingriff kommt. Dadurch wird dafür gesorgt, daß der Schnäpper stets hakenspitzenseitig gehalten ist, wenn die Öffnungsbewegung des Schnäppers noch nicht begonnen hat. Eine ungewollte Verdrehbewegung des Schnäppers mit dessen gleichzeitiger Belastung kann also nicht zu einer Überlastung des Schnäppers führen.

In Weiterbildung der Erfindung ist im Hakenkörper nahe dem Hakenschaft eine Anbindebohrung vorhanden, die mindestens einen Radius über einem flachen Anbindesteg aufweist. Mit dieser Anbindebohrung kann der Karabinerhaken bzw. seine Sicherungseinrichtung sowohl in Verbindung mit entsprechend dimensionierten Rundseilen, als auch mit Flachbändern verwendet werden.

Die Erfindung wird anhand von in der Zeichnung dargestellten Ausführungsbeispielen erläutert. Es zeigt:

Fig. 1 eine teilweise geschnittene Seitenansicht einer ersten Ausführungsform eines Karabinerhakens gemäß der Erfindung,

Fig. 2 eine gegenüber der Fig. 1 um 90° gedrehte Frontansicht des Körpers des Karabinerhakens,

Fig. 3 eine Darstellung des Schnäppers in seiner Öffnungsbereitschaftslage an einer Abwicklung der Oberkante des Hakenschaftes,

Fig. 4 eine der Fig. 1 entsprechende ungeschnittene Teilansicht einer weiteren Ausführungsform eines erfindungsgemäßen Karabinerhakens und

Fig. 5 eine Aufsicht auf die Schnäpperspitze.

Die abgebildeten Karabinerhaken 10, 10' besitzen einen Hakenkörper 11 mit einem Hakenschaft 12 und einer Hakenspitze 13, die ein Hakenmaul 14 vor der Hakenöffnung 15 des Karabinerhakens bilden. Der Karabinerhaken 10, 10' wird bei offenem Hakenmaul 14 z. B.
um ein Seil 17 gehängt und ist mit einer Anbindebohrung 16 des Hakenfußes 18 beispielsweise an einem
Flachband 19 zur Personensicherung verbunden. Statt
des Flachbandes 19 kann in die Anbindebohrung 16 auch
das Seil 20 oder ein Seil geringeren Durchmessers eingehängt werden, wie sich aus den beiden unterschiedlichen, nicht näher bezeichneten Radien oberhalb des
Anbindesteges 21 ergibt. Im Falle einer vertikalen
Zugbeanspruchung durch die Seile 17, 20 in vertikaler
Richtung ist der Karabinerhaken 10 mit seiner Linie
A-B um etwa 45° nach rechts vertikal angeordnet.

Im Hakenschaft 12 ist innerhalb einer Längsausnehmung 22 ein Schnäpper 23 angeordnet, der unter
der Einwirkung einer Schnäpperfeder 24 steht. Der
Schnäpper 23 ist ein zylindrischer Stift, dessen federseitiges Ende zur Aufnahme eines Teils der Schnäpperfeder 24 hohl ausgebildet ist. Innerhalb dieses Hohlraums greift die Schnäpperfeder 24 mit ihrem oberen
Ende 24' verdrehungssicher in eine axiale Ausnehmung
des Schnäppers 23, während ihr anderes Ende 24'' verdrehungssicher in eine entsprechende Ausnehmung eines
Verschlußteils 25 am unteren Ende der Längsausnehmung
22 eingreift, wo das Verschlußteil 25 fest mit dem
Hakenschaft 12 verbunden ist. Die Schnäpperfeder 22
ist eine Druckfeder, die den Schnäpper 23 nach oben
zu schieben versucht und außerdem drehvorgespannt ist,
also den Schnäpper 23 zu verdrehen versucht.

Eine Verdrehung des Schnäppers 23 wird verhindert, solange sich der am oberen Ende des Schnäppers
23 befindliche Betätigungsbart 26 in einem der Längsausnehmung 22 parallelen Führungsschlitz 27 des Hakenschafts 12 befindet. In diesem Führungsschlitz 27 wird der Schnäpper 23 von Hand mit einem Daumenstück 28 des Betätigungsbarts 26 gehalten. Das Daumenstück 28 hat eine zur Hakenspitze 13 und zum Betätigungsbart 26 hin geneigte Betätigungsfläche 28', um die Verschiebebewegung des Schnäppers 23 zu bewirken.

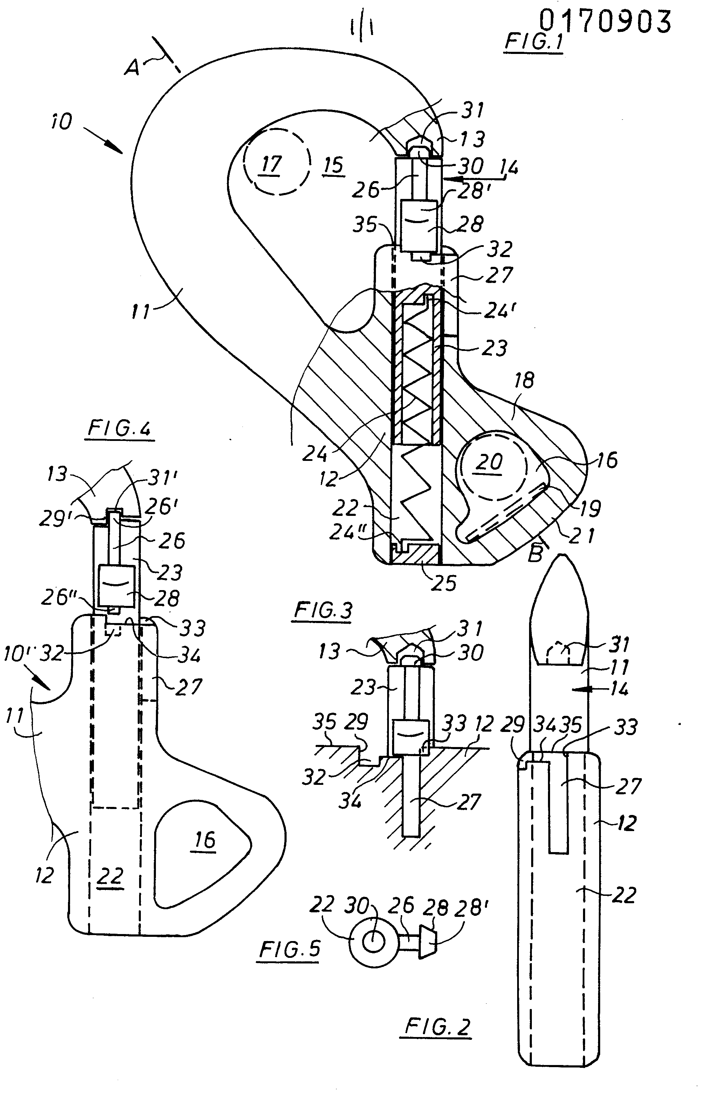

Bei der in Fig. 1 dargestellten Verdrehstellung des Schnäppers 23 ist der Betätigungsbart 26 um 90° zum Führungsschlitz 27 verdreht angeordnet, wobei das unterhalb des Daumenstücks 28 befindliche untere Ende des stegförmigen Betägigungsbarts 26 an einem Drehbegrenzungsanschlag 29 anliegt, der aus Fig. 2, 3 ersichtlich ist. Der Drehbegrenzungsanschlag 29 hält den Betätigungsbart 26 mit seinem Daumenstück 28 aus der Hakenöffnung 15 heraus in einer zur Haken- bzw. Darstellungsebene senkrechten Richtung.

Das obere Ende des Schnäppers 23 greift mit einem Vorsprung 30 in eine Bohrung 31 der Hakenspitze 13. Hierdurch wird das obere Ende des Schnäppers 23 im Falle einer zufälligen Belastung des Schnäppers 23 durch das Seil 17 gegen diese Belastung unterstützt bzw. gegen Überlast gesichert.

Unterhalb des Betätigungsbarts 26 ist eine Eingriffsausnehmung 32 vorhanden, deren Breite etwas größer ist, als die Bartbreite. Wird der Betätigungsbart 26 aus seiner in Fig. 1 dargestellten Lage heraus nach unten bewegt, z. B. durch ein im Sturzfalle am Daumenstück 28 angreifendes Seil, so verhindert der Eingriff des unteren bzw. hakenschaftseitigen Endes des Betätigungsbarts 26 in die Eingriffsausnehmung 32 ein Verdrehen des Schnäppers 23 und damit die Gefahr einer das Hakenmaul 14 öffnenden Verschiebebewegung.

Um eine ordnungsgemäße Öffnung des Hakenmauls 14 zu erreichen, wird das Daumenstück 28 beaufschlagt und vor den Führungsschlitz 27 in Öffnungsbereitschaftslage des Schnäppers 23 verdreht. Das ist insbesondere aus der Fig. 3 ersichtlich, die eine Abwicklung der Oberkante 35 des Hakenschafts 12 zeigt. Der Betätigungsbart 26 befindet sich einschiebebereit oberhalb des Führungsschlitzes 27. Die sichernde Verbindung zwischen dem Vorsprung 30 und der Bohrung 31 der Hakenspitze 13 ist noch nicht gelöst. Das untere Ende des Betätigungsbarts 26 liegt an dem aus Fig. 1 ersichtlichen, die Öffnungsbereitschaftslage bestimmenden Stellanschlag 33 an.

Fig. 3 läßt auch erkennen, daß die Oberkante 35 des Hakenschaftes 12 im Bereich 34 zwischen dem Führungsschlitz 27 und der Eingriffsausnehmung 32 zur Bildung des Drehbegrenzungsanschlags 29 bzw. des Stellanschlags 33 gegenüber der verbleibenden Oberkante 35 des Hakenschafts 12 zurückspringt.

Der Schnäpper 26 des Karabinerhakens 10' der Fig. 4 ist an seinem hakenspitzenseitigen Ende dahingehend abgewandelt, daß das obere Ende 26' des Betätigungsbartes 26 vorspringt und in eine entsprechend nutförmige Rastausnehmung 31' der Hakenspitze 13 eingreift. Außerdem liegt das obere Bartende 26' unter Einfluß der nicht dargestellten Schnäpperfeder an einem von der Hakenspitze 13 gebildeten Drehbegrenzungsanschlag 29' an. Zur Verstellung des Schnäppers 22 in eine der Fig. 3 entsprechende Öffnungsbereitschaftslage muß zunächst das obere Bartende 26' aus der Ausnehmung 31' durch eine Verschiebebewegung des Schnäppers 23 nach unten bewegt werden. Hierbei kann sich das untere Bartende 26'' an dem zurückgenommenen Bereich 34 der Oberkante 35 des Hakenschaftes 12 abstützen und verschoben werden. Es ist aber auch möglich, eine Eingriffsausnehmung 32 vorzusehen, wie gestrichelt dargestellt ist. In diesem Fall muß zur Öffnung des Hakenmauls 14 der Schnäpper 23 zugleich mit einer Verschiebebewegung durch eine Dreh-verstellbewegung beaufschlagt werden, damit das untere Bartende 26'' nicht ungewollt in Eingriff mit der Eingriffsausnehmung 32 gerät. Nach dem Anschlag des unteren Bartendes 26'' am Stellanschlag 33 kann der Schnäpper 22 wie vorbeschrieben nach unten in die Längsausnehmung 22 verschoben und damit das Hakenmaul 14 geöffnet werden.

In Fig. 5 ist die Schnäpperspitze mit dem Vorsprung 30 dargestellt und es ist der Betätigungsbart 26 mit dem Daumenstück 28 in T-förmiger Ausbildung ersichtlich. Das Daumenstück 28 mit der Betätigungsfläche 28' kann auch in einer anderen, der Fingerform angepaßten geschweiften Aus-führungsform vorhanden sein.

Ansprüche:

1. Karabinerhaken, insbesondere für Hochbausicherungen, dessen Hakenmaul mit einem in einer Längsausnehmung des Hakenschaftes verschieblichen, federbelasteten Schnäpper verschlossen ist, an dem ein
seitlich nach außen vorspringender, in einen Führungsschlitz des Hakenschaftes eingreifender Betätigungsbart befestigt und an dem ein federbelastetes
Sperrteil vorhanden ist, das vor dem Öffnen des
Schnäppers von Hand und entgegen der Federkraft
in eine Öffnungsbereitschaftslage verstellbar ist,
d a d u r c h   g e k e n n z e i c h n e t, daß
der Betätigungsbart (26) das Sperrteil ist und
bei Schließstellung des Schnäppers (23) von der
Schnäpperfeder (24) aus dem Führungsschlitz (27)
herausgedrückt und zu letzterem verdreht gehalten
ist.

2. Haken nach Anspruch 1, d a d u r c h   g e -
k e n n z e i c h n e t, daß der Betätigungsbart
(26) von einem Drehbegrenzungsanschlag (29)
aus der Hakenöffnung (15) herausgehalten ist.

3. Haken nach einem der Ansprüche 1 oder 2,
d a d u r c h   g e k e n n z e i c h n e t, daß
die Verdrehstellung des Betätigungsbartes (26)
durch dessen verschiebungsfreies Verdrehen aus
der am hakenspitzenseitigen Ende des Führungsschlitzes (27) gelegenen Öffnungsbereitschaftslage
erreichbar ist.

0170903

- 2 -

4. Haken nach einem der Ansprüche 1 bis 3,
bei dem die Schnäpperfeder eine Schraubenfeder
ist, die mit einem Ende am Schnäpper und mit
dem anderen Ende am Hakenschaft angreift,
d a d u r c h   g e k e n n z e i c h n e t, daß
die Enden (24', 24'') jeweils verdrehfest angebracht sind und die Schnäpperfeder (24) drehvorgespannt ist.

5. Haken nach einem der Ansprüche 1 bis 4,
d a d u r c h   g e k e n n z e i c h n e t, daß
der Hakenschaft (12) eine Eingriffsausnehmung (32)
aufweist, in die der in Verdrehstellung befindliche Betätigungsbart (26) bei das Hakenmaul (14)
öffnender Verschiebewegung verdrehungsgesichert
eingreift.

6. Haken nach einem der Ansprüche 1 bis 4,
d a d u r c h   g e k e n n z e i c h n e t, daß
die Hakenspitze (13) eine Rastausnehmung (31')
aufweist, in der der in Verdrehstellung befindliche Betätigungsbart (26) von der Schnäpperfeder
(24) gegen Verdrehen gesichert gehalten ist.

7. Haken nach den Ansprüchen 2 bis 6,
d a d u r c h   g e k e n n z e i c h n e t, daß
die hakenöffnungsseitigen Kanten der Eingriffsausnehmung (32) und/oder der Rastausnehmung (31')
den Drehbegrenzungsanschlag (29, 29') bilden.

8. Haken nach einem der Ansprüche 1 bis 7,
d a d u r c h   g e k e n n z e i c h n e t, daß
die der Verdrehstellung gegenüberliegende Kante
des Führungsschlitzes (27) einen die Öffnungsbereitschaftslage des Betätigungsbarts (26) bestimmenden Stellanschlag (33) aufweist.

0170903

9. Haken nach einem der Ansprüche 1 bis 8, dadurch gekennzeichnet, daß an dem Schnäpper (23) ein in die Hakenspitze (13) eingreifender Vorsprung (30) vorhanden ist, der erst bei in den Führungsschlitz eingreifendem Betätigungsbart (26) mit der Hakenspitze (13) außer Eingriff kommt.

10. Haken nach einem der Ansprüche 1 bis 9, dadurch gekennzeichnet, daß im Hakenkörper (11) nahe dem Hakenschaft (12) eine Anbindebohrung (16) vorhanden ist, die mindestens einen Radius über einem flachen Anbindesteg (21) aufweist.

FIG.1  0170903

FIG.4

FIG.3

FIG.5

FIG.2

Europäisches
Patentamt

# EUROPÄISCHER RECHERCHENBERICHT

| | EINSCHLÄGIGE DOKUMENTE | | EP 85108463.2 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl 4)** |
| X | DE - A1 - 2 614 961 (BRÜGGEMANN & BRAND)<br><br>* Patentanspruch 1; Fig. 1,2 *<br><br>-- | 1 | F 16 B 45/04 |
| X | GB - A - 2 001 384 (HENSSGEN KARA-BINERHAKEN)<br><br>* Zusammenfassung *<br><br>-- | 1 | |
| A | DE - A1 - 2 332 585 (FA. GEBR. BATZ)<br>* Patentanspruch 1; Fig. 1-5 *<br><br>-- | 1 | |
| A | US - A - 3 983 607 (HOWARD C. STE-VENS, JR.)<br><br>* Zusammenfassung *<br><br>-- | 1 | |
| A | US - A - 3 877 117 (RAYMOND LEGROS et al.)<br><br>* Zusammenfassung *<br><br>-- | 1 | **RECHERCHIERTE SACHGEBIETE (Int. Cl 4)** |
| P,A | DD - A1 - 218 420 (VEB KARABINER-HAKENFABRIK)<br><br>* Patentanspruch 1; Fig. 1,2 *<br><br>-- | 1 | F 16 B<br>A 44 B |
| A | GB - A - 1 574 386 (JEAN WALTER-SCHEID)<br><br>* Patentanspruch 1; Fig. 1,2 *<br><br>---- | 1 | |

Der vorliegende Recherchenbericht wurde für alle Patentansprüche erstellt.

| Recherchenort | Abschlußdatum der Recherche | Prüfer |
|---|---|---|
| WIEN | 10-10-1985 | REIF |